# EUROPEAN PATENT APPLICATION

(11) **EP 1 688 290 A1**
(43) Date of publication of application: **09.08.2006**
(21) Application number: 04798241.8
(22) Date of filing: 17.11.2004
(51) Int. Cl.: B60J 11/00

(54) **HAIL-PROTECTION NETTING FOR VEHICLES**

(30) Priority: 17.11.2003 ES 200302734 U; 07.05.2004 ES 200401155 U
(71) Applicant: Martinez Sanchez, Rafael, 46117 Bétera (ES); Piquer Martinez, David, 46160 Liria (ES)
(72) Inventor: Martinez Sanchez, Rafael, 46117 Bétera (ES); Piquer Martinez, David, 46160 Liria (ES)
(74) Representative: Pons Arino, Angel
(86) International application number: PCT/ES2004/000514
(87) International publication number: WO 2005/047038

(57) **Abstract**

It is a common problem in the automotive industry to protect a vehicle located outdoors both effectively and practically against possible damaging impacts caused mainly by inclement weather such as hail.

The invention described and claimed herein came into being in response to this problem. This invention has been designed for fast, practical assembly, dismantling and folding; for easy transport, as it is compact when folded and, above all, to be effective for its intended purpose.

In the three embodiments, this invention is essentially comprised of a mesh (*1*) covering practically the entire vehicle; a body in between the mesh (*1*) and the object to be protected, whether an inflatable chamber (*3*), suction cup-balls (*10-13*) or a separating device (*16*); and some hooks (*5*) and handles with suction cups (*6*) for attaching the hooks in those areas where they cannot be hooked to the vehicle on their own; incorporating a zipper (*7*) door for the driver. With the mesh held in place with the hooks and tightened, the definitive protective layer claimed herein is created.

## Description

### FIELD OF THE INVENTION

The aforesaid invention described hereinbelow is aimed mainly for the automotive sector and sectors related thereto, specifically for guarding motor vehicles of all of models existing on the market (i.e. individual family cars); protection against possible impacts which they might sustain on their bodies and/or other elements of the car (roof, hood, trunk, doors, wing spoilers, fms, mudguards, fenders, ....; including the windshields and glass on all of the aforementioned parts).

Regarding hail being expressly mentioned in the Title as one of the possible impacts which the vehicle might sustain (or against which it is attempted to guard the vehicle) is due to its being especially conceived for those days on which the weather conditions, by means of rain in conjunction with hail, may sometimes damage, among others, cars, etc.; nevertheless, we reiterate the fact that the invention would not be solely and exclusively designed for protection in these cases.

As mentioned hereinabove, this invention is, in principle, for motor vehicles. Nevertheless, we deem it suitable that it not be confined to these cases so that the object of our invention not be limited solely to such motor vehicles, but rather to any type of vehicle; and much further beyond, to any type of object which may be subjected, whether or not located outdoors, to any type of aggression by an object or thing causing an impact or blow thereto.

### STATE OF THE ART

It is true that numerous implements and objects for protecting the body of vehicles located outdoors (or not) are on the market, quite particularly for protection against the effects of wear, fading, etc. caused by sunlight, also against the action of other inclement weather such as rain (i.e. awning)...

Those which are expressly mentioned but are nevertheless are in no way whatsoever incompatible with what is being proposed herein. In fact, they differ greatly from the idea which will be set forth in following hereinbelow. We deem them to be designed against other types of aggression (such as sunlight, rain...), not against impacts. Others, which are more similar to our invention as a result of their being for protection in this case more specifically against impacts, are of other designs, materials, etc. which are either of a different type than what we claim at a further point herein or make them less practical and/or ineffective, as shall be illustrated in following hereinbelow.

Of course, excepted from all of the above are the Utility Models (Spain) **U200302734 and U200401155**, the priority of which shall be claimed at a further point herein by means of this international application and those on which the same is based.

### DESCRIPTION OF THE INVENTION

The invention in question consists of several elements which actually comprise one single whole, which are those described in following hereinbelow. What must be pointed out at this point is that the primary distinguishing aspect of this invention in comparison to others is the easy, practical placement/mounting as well as dismantling, also its folding as well as the small space it takes up for its storage or transport, its effectiveness of course likewise being another aspect.

Special mention must also be made at this point of one same invention being submitted, but with some minor changes in some of the elements thereof, and we place greater emphasis on one of these variations( mesh **1** with inflatable chamber **3)** than on the others, setting it apart as of this point as the main modality to be claimed..., however, certainly by virtue of the imperative of unity of the invention. In any case, all of these variations clearly have a common denominator, comprising one sole general invention concept with one sole purpose and objective.

The above having been stated, each one of the elements comprising the same are detailed immediately in following hereinbelow:

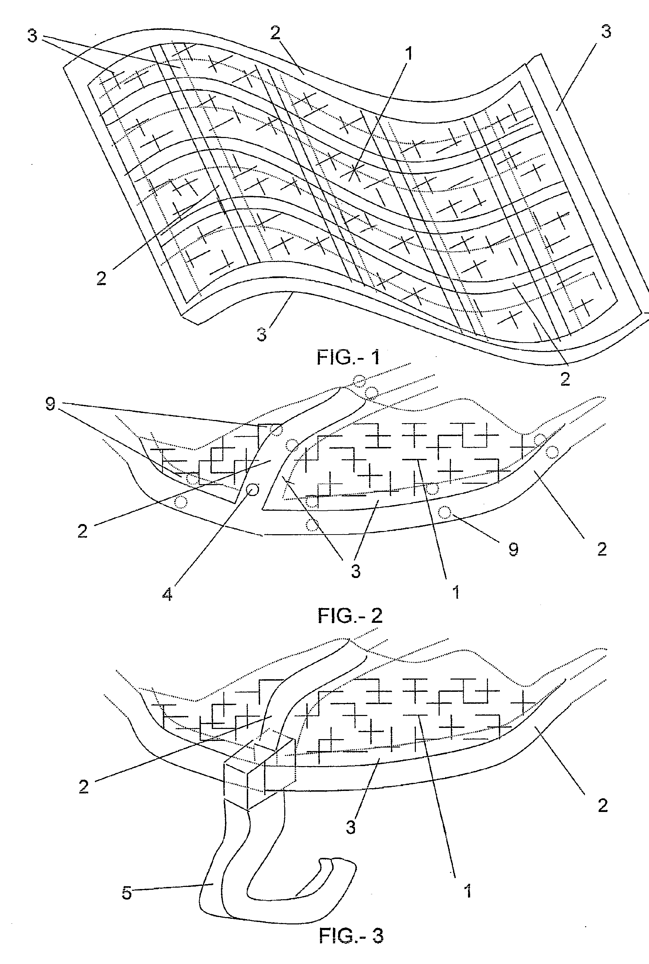

### ONE. Mesh and inflatable chamber: FIGS. 1, 5 and 6

### *Description:

Mesh **1** [ex. Made of nylon or other materials, as seen fit], reinforced, particularly sturdy yet highly flexible, on the sides and along the full length and width thereof (See FIG. 1) it will have several strips or seams of the same material **2,** but more reinforced, which will make these parts of the mesh sturdier. Its being sturdy yet flexible is for the purpose of serving to deaden possible blows or impacts.

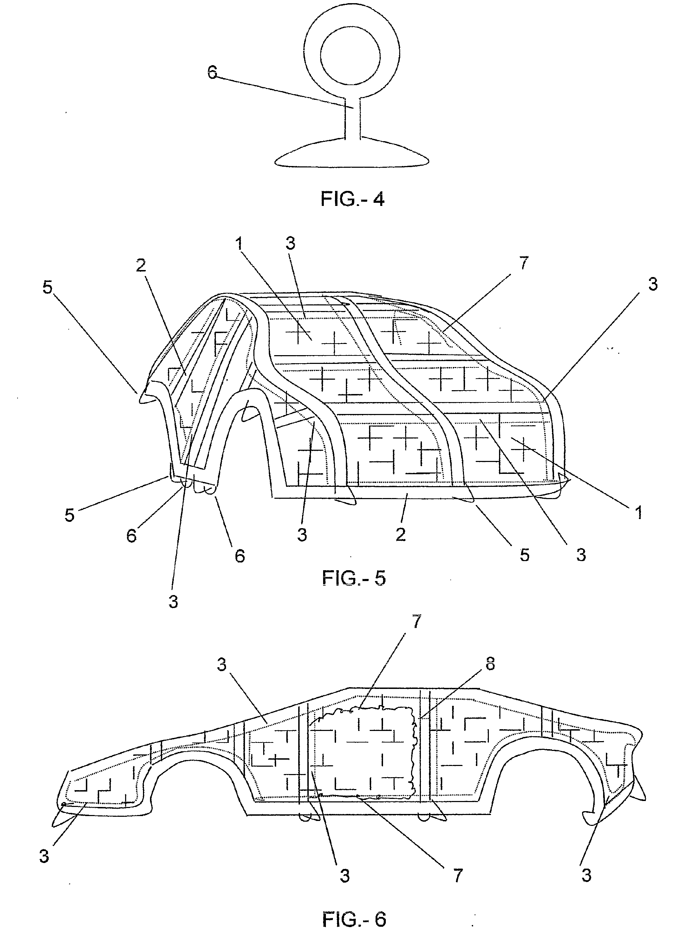

The shape of the mesh will also depend upon the vehicle or object for which it is intended to be used, this being for a better attachment or fit thereto. (See FIGS. 5-6, 10-11 and 13).

Underneath what are referred to as strips or seams **2** will be an inflatable chamber **3** incorporated and adhered thereto, which will be affixed or attached by means of another attachment system **9** (ex. Snaps or slips, Velcro...), the females thereof being in different positions on the mesh **1** and on the strips **2** thereof, the males being on the inflatable chamber **3,** these affording the possibility of slightly moving the position of the inflatable chamber **3** as convenient for a better fit to the shape of the vehicle or object, the air chamber **3** forming a complete framework or channeling which will be sturdy and flexible (i.e. made of material similar to that of floats, special gum, rubber ...). This inflatable chamber **3** will be a whole, with one single air intake (o more than one, channeled into one single one, as best fitting), on which there will be a valve **8** as an inlet nozzle through which it will be inflated and, as mentioned directly hereinabove, it will run along the entire (or practically the entire) mesh 1 underneath the strips **2** thereof, to which it will be adhered, as previously stated hereinabove (See FIG. 5 and 6); the central tubular span (which runs from the hood to the trunk, over the roof of the vehicle) will comprise a whole in the form of a spinal or vertebral body, will be relatively thicker than the other tubular spans, this being for the purpose of marking a clear-cut central A-shaped peaked slope.

For practical reasons, these channels formed by the inflatable air chamber **3** may take on different shapes.

As is explained directly hereinabove, the inflatable chamber 3 has one single air inlet by way of a valve **8** (or more than one valve, all channeled into one single valve). Nevertheless, if the practical requirements make it so advisable to achieve an even faster deflation, some or all of the ends of the tubes will be fitted with air outlets by means of hermetic seals **4** (See FIG. 2), that is, prepared in order not to leak air, in order, wherever necessary, to uncover those necessary for achieving a greater, faster flowrate of the outflowing air. These may be, as practically suitable, the same as the aforementioned multiple air inlets, channeled into one single one.

In any case, chamber **3** serves as a body in between the car body or other parts and the mesh **1** (in the event that the object to be protected be, for example, a vehicle...)

### *Dimensions:

The dimensions of the mesh will depend upon the vehicle or object on which it is intended for use.

The dimensions of the strips or seams shall be of approx. 2-3 cm (although they may also vary, as needed).

The dimensions of the inflatable air chamber **3,** may also vary depending on practical needs.

### TWO. Hook: FIGURE 3

### *Description:

These are high-strength plastic hooks **5** FIG. **3,** both for withstanding the maxim possible tautness of the mesh (ex. nylon) **1** to which it is attached (this is for the purposes of said mesh **1** being perfectly taut). Specifically, these hooks are attached to the mesh **1** at the sides thereof, where the sturdier parts thereof - the seams or strips **2 -** are located. The number of hooks necessary will depend upon the type of vehicle or object in question. The end purpose, as has been stated at an earlier point herein, is that of serving as anchoring in order to get the mesh to tighten, thus fitting the mesh **1** to the outline and/or shape of the vehicle or object (thus achieving full-protection armoring). FIGS. 1, 5-6, 10-11 and 13. The positioning of the anchoring will depend upon where they can be hooked (ex. Vehicle fenders, bottom sides thereof...). If there were not to be any possibility of hooking in same places, in these cases a suction cup with a special handle **6** would be used to achieve anchoring (FIG. 4). The hooks **5,** as previously stated hereinabove, will be plastic, which is for preventing damage to the vehicle body or other parts to which they can be hooked.

### *Dimensions:

Once again, this would vary as needed.

### THREE. Handle suction-cup: FIGURE 4

### *Description:

This is a suction cup **6** which has a round handle incorporated so that they can be used for hooking, for example, the hooks **5** described hereinabove. This complete object will be made, for example, of high-strength, flexible rubber or plastic. FIG. 4, 5-6, 10-11 and 13.

### *Dimensions:

The dimensions of the suction cup-handle **6** will vary as needed. However, it may be a suction cup measuring **4** cm high by 2 cm in diameter and the handle 2 cm in diameter.

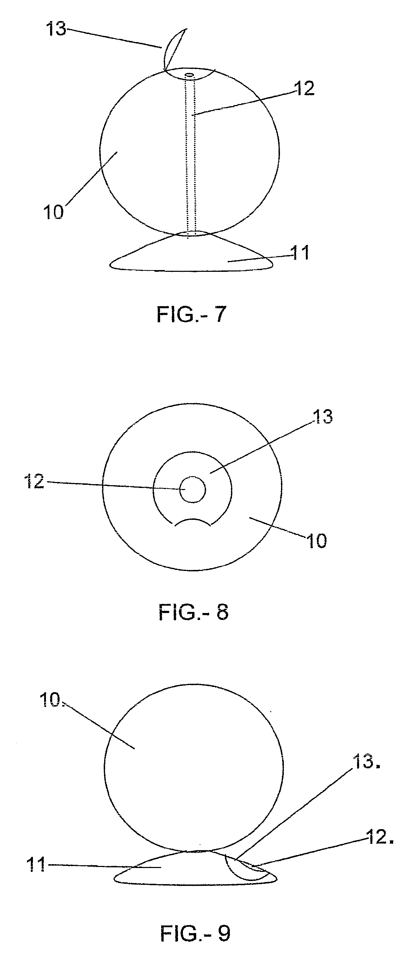

### FOUR. Ball-Suction Cup: FIGURES 7-13

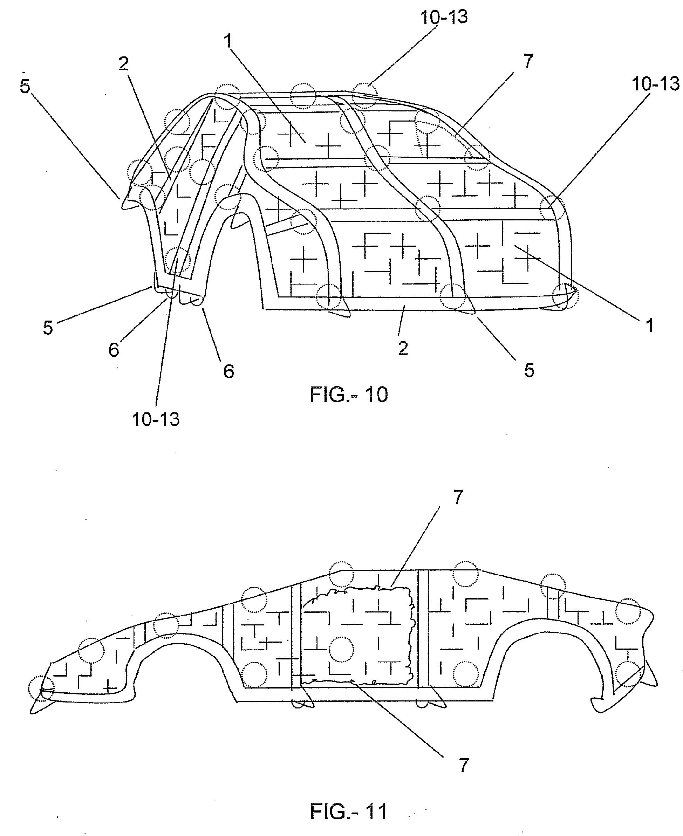

Prior to describing the ball-suction cup **10** and **11,** special mention must be made once again at this point of the fact that this is actually an element alternative to the inflatable air chamber **3,** and it would thus only make sense to incorporate this element into the invention in the case that the inflatable chamber **3** were eliminated. Therefore, in this case, in addition to referring to the corresponding Figures per se, FIGURES 7-13 (in addition to the common ones: FIGURES 1, 3 and 4, eliminating the elements of the inflatable chamber **3** and the hermetic seals **4),** one would have to refer to FIGURES 10-11 and not to FIGURES 5 and 6.

In any cases, reference is made at all times herein to one same invention with one same end purpose or objective, by virtue of the imperative of the principle of unity of the invention.

### *Description:

The ball-suction cup **10** and **11** (ex. Made of rubber, foam, plastic..., as deemed suitable) is a spherical or round body, at the base of which it is inseparably joined to a suction cup **11**.

This is a sturdy, hard element, yet sensitive and delicately flexible.

The positioning will be along the full length and width of the vehicle body or other parts of the vehicle or object (ex. On a vehicle: roof, trunk, hood, windshields and windows...), as deemed necessary, and these will be the bodies situated in between this vehicle body or other parts and the mesh **1.** There will be two types of ball-suction cup sizes, the larger ones (Model A or MA)will be specifically placed along the entire central part (viewing, for example, the car from front to rear or vice versa) of the vehicle or object (FIGS. 10 and 11), the smaller ones (Model B or MB) being situated over the remainder, and the number of both depending upon the size of the vehicle or object.

On the other hand, both for the MA and the MB, the ball-suction cup **10** and **11** is perforated by a miniscule hole which runs from the top thereof **10** to the bottom , (said perforation) even running up to the suction cup **11,** that is to say, its base, this being an air passage **12** (FIGS. 7 and 8) which runs through the ball-suction cup from the two aforementioned ends, connecting the two.

At the two ends of the air passage **12,** on the one at the top of the ball-suction cup **10** and **12,** serving as an adjustment of this passage, is a small cap **13** (FIGS. 7 and 8), which is round and has a small groove so that it can be easily uncovered/removed (by inserting, for example, a fingernail), the cap **13** however not completely detaching from the ball-suction cup **10,** a body to which attached: The cap **13** therefore remains attached at its "base" **10** by one of its sides (FIG. 7). The larger size of the cap **13** in relation to the air hole or passage **12** it covers is for a better, more practical covering thereof by means of the groove made therein. The end purpose of the cap **13** existing is for it to close the air passage **12** while the ball-suction cup **10** and **11** is adhered to a body (ex. To the body of a vehicle) and so that, when one wished to remove the ball-suction cup **10** and **11** from the body to which it is attached, the cap **13** is uncovered, allowing the air to flow into the suction cup **11** proper and thus achieving easy removal of the suction cup **11** from the body in question to which hit was adhered.

It must however be said that the cover **13** will not exceed the circumference or sphere of the ball-suction cup **10** and **11** (FIG. 7), but rather that it will be at exactly the same level, the reason for this being to avoid any overhang whatsoever.

### *Air passage in suction cup:

Another option is for the cap **13** to be on the suction cup **11** proper, which would be perforated, all of which would be of the same characteristics and conditions and for the same end purpose as stated up to this point. In this case, the air passage **12** does not rung through the suction cup **10,** the air passage being situated, as stated directly above herein, on one side of the suction cup **11** proper (FIG. 9).

### *Suction cup balls attached to one another:

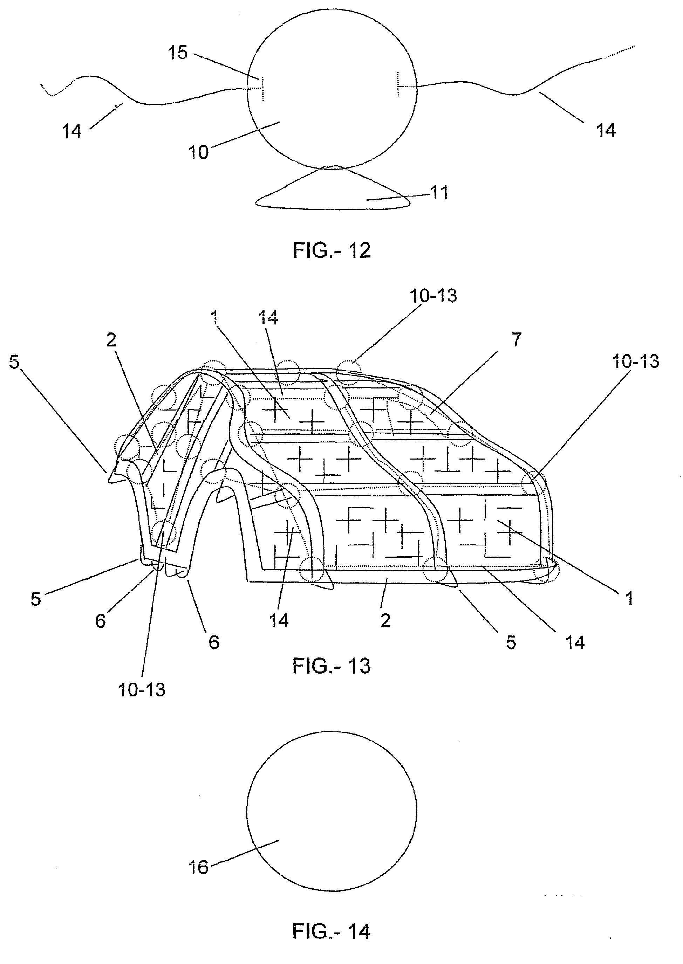

In any case, all of the ball-suction cups **10** and **11** (both in option air passage in ball **10** and in suction cup **11),** placed on the object to be protected, can be joined together by a sturdy yet fme and highly flexible wire or cable **14** running through both sides of each one of the balls **10,** being inherently attached to the same by a crosswise device **15** in the form of a stop, keeping all of the ball-suction cups joined together. This will therefore provide for greater ease when putting them into place or removing them, and they will be spaced evenly apart, as their positions will be fixed on being designed such that they cannot shift position or move along the wire or cable **14** (FIGS. 12 and 13).

### *Dimensions:

It must be taken into account that approximate measurements are given to serve as examples, but their sizes may nevertheless vary depending on the circumstances and needs, as well as the dimensions of the vehicle or object on which they are going to be used.

The ball-suction cup **10** and **11** Model A will have an approximate sphere diameter of 8 cm, the part corresponding to the attached suction cup **11** being approximately 1 cm taller and measuring approximately 5 cm in diameter.

The ball-suction cup **10** and **11** Model B, will have, on its part, a smaller sphere diameter (ex. Approx. 6 cm); its suction cup being the same size in height (approx. 1 cm) and smaller in size (ex. Approx. 4.5 cm) as far as its diameter is concerned.

The air passage **12** will measure approx. 1 mm in diameter, regarding its height, given that it runs from one end to the other of the ball-suction cup **10** and **11,** it will be the same height thereas (This will of course be applicable only in the case of FIGS. 7 and 8, not in FIG. 9).

The cap 13, on its part will measure approximately 1 cm in diameter and will be perhaps approximately 2-3 mm in height.

In case of the balls-suction cups option **10** and **11** joined to one another, the hole in each ball **10** through which the wire or cable **14** running through both sides will be miniscule, being strictly that which is necessary in order for the wire or cable in question to run through. (FIG. 12).

The device **15** serving as a stop will also be of very minute dimensions, even thought it were not to be visible, as it will be located on the inside of the ball **10.**

The dimension of the wire or cable **14** holding all of the balls together will be of the necessary length, depending upon the object to be covered (FIG. 13).

### FIVE. Separating device (without suction cup): FIG. 14

Another completely alternative option to the inflatable air chamber **3** and what is referred to as the ball-suction cup **10** and **11(in** any of the modalities thereof) is that described in following herein. In any case, it must be said that we once again reiterate that reference is being made at all times herein to one same invention with one same end purpose or objective, as all of the other elements are common, this being by virtue of the imperative of the principle of unity of the invention.

### *Description:

This option is that of placing beneath the net **1** and **2** another type of separating element or device **16** (ex. Made of rubber, foam, plastic..., as deemed fitting), whether it also be spherical in shape like a ball or of another shape (FIG. 14), this device in between **16** being incorporated into and adhered to the mesh **1** and **2,** affixed or attached by means of another attachment system **9** (ex. Snaps or clips, Velcro...), the females thereof being located at various positions on the mesh **1** and its strips **2,** and the males on the separating device **16,** which will afford the possibility of slightly moving the position of the separating device **16** as convenient for a better fit to the shape of the vehicle, as, in this option, the separating device **16** in question serves as a separating body in between the mesh **1** and the object to be protected (ex. Vehicle body) This separating device **16** is sturdy and hard, yet at the same time sensitive and delicately flexible; it being spaced or located as desired along the length and width of the vehicle body, it being necessary to state that it must be put into place at the same time as attaching the protective mesh **1,** given that, as stated at an earlier point herein, it is attached or adhered to the mesh **1;** the dimensions thereof being in keeping with those necessary for it to serve as a separating body...

Thus, the elements of the mesh **1** and its seams or strips **2** will be the same, with the same applications and functions, just as the hook **5** and the suction cup hook **6;** even having the same attachment elements 9 as the inflatable chamber **3** option.

Of course, as it is unnecessary, it will not have an air chamber or the accessory elements thereof, or a suction cup or any air passage whatsoever, or any cable joining them, etc...

To view the separating device **16** being discussed at this point (in addition to a FIG. 14) due to the graphic description being practically identical to that set out in FIGS. 10 and 11, we refer to these figures with the sole unique aspect of replacing elements **10-13** with the separating device **16.**

### BRIEF DESCRIPTION OF THE DRAWINGS

**FIG 1.-** Shows the mesh **1,** the type of fabric thereof (ex. nylon) under normal condition (including its seams or strips **2).** It must be said that the mesh 1 is to be of the suitable shape for the vehicle or object for which it is to be used, even more so when it is tightened in the manner described.
   Given that this is the main modality to be highlighted, as previously stated hereinabove, underneath the seams or strips **2** can be seen, adhered, a complete inflatable air chamber 3 framework or channeling.
   Reference must also be made to the existing air inlet valve **8,** although it not be noticeable in the FIGURA.
**FIG. 2.** Shows on which sections of the inflatable air chamber **3** the hermetic seals **4,** by means of a cap, will be located in the event of it being necessary for them to be incorporated as supplementary air outlets (which, as stated at an earlier point herein, may coincide with the multiple additional air which may be incorporated..., but it must be said that these would be inlets which would be channeled to one single main valve **8).**
   On the other hand, in the case of the adhering of the chamber 3 to the seams or strips **2** by means of joining elements **9** (ex. Snaps or Velcro, etc) being used, it is indicated through what areas they will run.
**FIG 3.** Shows the plastic hook **5** and how it is attached to the mesh **1,** through its seams or strips 2.
**FIG. 4.** Shows the shape of the suction cup with handle **6** from a front view.
**FIG. 5.** Shows one example of how the invention described herein (model seen practically from the front) can be applied and what one of the configurations and shapes thereof are, specifically of the modality via mesh **1** with inflatable air chamber **3.** This example and this modality are the only ones which are going to be detailed in the following section titled "Detailed Description...".
   It must be further explained, although it not be seen well (due to the angle taken), that the driver's side has a zipper door **7** incorporated (See FIGURE 6). Also further explain that although they are not visible (either in this FIGURE or in FIGURE 6), the mesh **1** and the inflatable chamber **3** have the aforementioned attachment elements **9** (ex. Snaps, Velcro ...)
**FIG. 6.** In this figure, seen from a different perspective, the finished assembly of the same example seen in previous FIG. 5 is also shown.
   As previously mentioned in the preceding figure, it must be said that, in this FIGURE, unlike the immediately preceding one hereinabove, a zipper door **7** which, when zipped, will be joined to the rest of the mesh **1** by attachment to a strip or seam **2** is visible, this being a door which, despite being seen well only in this FIGURE, must be noted, once again, as also existing in FIGURE 5, only that therein it is not properly visible, but is however visible herein given that this FIGURE shows the left profile of the object, exactly where the aforesaid zipper door **7** is located (it must also be pointed out that in countries where the driver's side is located on the opposite side, this door would be on the side opposite to the one shown).
**FIG. 7.** Based on the other modality put forth, this FIGURE shows the outer shape of the ball-suction cup **10** and **11**, from a cross-section perspective, also allowing a view of its air passage **12** on the inside thereof. On the other hand, it also shows the cap**13** and how the shape thereof fits up to the sphere or circumference of the ball-suction cup **10** so that it will be at the exact same level (without overhanging). As shown, the cap **13**, even when open, does not completely detach.
**FIG. 8**. Shows the outside of the ball-suction cup **10** from a plan view (see from above) for the purpose of showing the shape and position of the cap **13**.
**FIG. 9.** Shows the outside (and inside) of the suction cup **11.** It must be noted that, even though this is the same suction cup shown in preceding FIGURES 7 and 8, the difference is that, herein, it has a cap **13** and a small air passage **12** of the same characteristics and end purposes as those shown hereinabove incorporated and must therefore be understood as an alternative to FIGS. 7 and 8.
**FIG. 10**. Shows another of the examples of how the invention described herein (model seen practically from the front) can be applied and what one of the configurations and forms is, specifically of the modality by means of mesh **1** with ball-suction cups **10-13.** As previously stated hereinabove, this one will not be detailed under the section "Detailed description...".
   As has been stated hereinabove in FIGURES 5 and 6, it must be further explained that, although it is not visible (due to the angle taken), a zipper door 7 is incorporated on the driver's side (See FIGURE 11).
**FIG. 11.** Herein, from another perspective, the finished assembly of the same example seen in preceding FIG. 10 is also shown.
   For all other aspects, we refer to the same comments made in FIGURE 6 with regard to FIGURE 5, it having to be said that here the comments refer to FIGURE 10.
**FIG. 12.** Here, one of the minor variations of the ball-suction cup **10** and **11** is shown. As FIGURES 7 and 9, it shows the outer shape (although also partially the inside) of the ball-suction cup **10** and **11,** from a cross-sectional view.... It must be said that the difference here with regard to these FIGURES 7 and 9 mentioned directly hereinabove is that here the ball-suction cup **10** and **11** has a wire or cable **14** incorporated which runs through both sides of the ball, being inherently attached thereto by a crosswise device **15** serving as a stop, serving to join all of the ball-suction cups to one another.
**FIG. 13.** Showing the same image as in FIGURE 10, but with the difference that here the wire or cable **14** is incorporated, joining together all of the ball-suction cups **10** and **11.** Regarding all other aspects, the same stated in FIGURE 10 applies.
   Regarding the crosswise device **15,** despite its not being visible, it must be noted that it would indeed be incorporated.
**FIG. 14.** Showing the other modality alternative to the mesh **1** with inflatable air chamber 3 or that of the mesh 1 with ball-suction cups **10** and **11.**
   The figure (in cross-section or plan view) of a spherical-shaped separating device (without suction cup) **16** is shown, it nevertheless being possible for it to be of other shapes (ex cube-shaped) as suitable.

From here, we once again refer back to FIGURES 10 and 11 with regard to a further explanation of the element (separating device **16)** shown in this FIGURE 14. It must be further explained, as had been previously stated hereinabove, that the ball-suction cup element **10-13** shown in the former would be replaced by the separating device 16 shown in this FIGURE 14.

This will not be highlight in the "Detailed Description..." section in following either.

### DETAILED DESCRIPTION OF ONE EMBODIMENT OF THE INVENTION AND INDICATION AS TO THE INDUSTRIAL APPLICATION THEREOF

Based mainly on the illustrations of FIG. 5 and FIG. 6, the description of one of the ways of applying the invention claimed herein would be that which is described in following:
As shown in the illustrated example (FIG. 5 and FIG. 6), firstly, the mesh 1 is of the shape of the vehicle it is going to cover, the entire vehicle being covered with the mesh **1,** that is to say, the different parts of the vehicle body and the windshields and windows. It is also seen that, directly beneath the entire framework of strips or seams **2** included in the mesh **1,** there is an inflatable air chamber **3** which is adhered to the mesh **1** by way of these strips or seams **2,** forming a whole. The position of the inflatable chamber might vary slightly, as this is what the attachment elements **9** between the mesh **1** and **2** and inflatable chamber **3** are for, be they snaps, Velcro or others ... (elements which however not being seen in FIG. 5 and FIG 6, are clearly described in FIGURE 2). The system for this variation is specifically that described hereinabove (which will be further expanded upon at this point). There are several female attachment elements **9** (ex. Snaps), their being located at several positions on the mesh **1** and **2,** and there are male attachment **elements9** (ex. Snaps) incorporated on the inflatable air chamber **3.** Now then, the male attachment elements **9** will be attached or affixed, as desired, in a specific position of the different variations of the female attachment elements **9,** the reason for this being to thus make it possible to fit the mesh **1** more perfectly to the shape of the specific make and model of the vehicle in question.

On the other hand, it can be seen that said mesh **1** has hooks **5** placed at its ends, and that these hooks **5** are specifically positioned on the part of the mesh **1** where there is a strip or seam **2** which runs around the edge of the entire mesh **1** and exactly where the ends of other strips or seams **2** that run across (horizontally or vertically) the entire net **1** meet. Now then, these hooks **5** are those which, by hooking them either to the parts of the vehicle body and vehicle in general wherever possible (ex. To the fenders), or to the suction cup-handle **6** (previously set in place), make it possible, by way of said anchoring, to leave mesh **1** initially tightened.

Nevertheless, the final tightening will be done during the next step.

After hooking the mesh **1** with the hooks **5,** the air chamber **3** will be inflated using a manual or electric pump (the electric pump being inserted into the electric cigarette lighter inside the car) by means of a nozzle or valve **8** (as previously stated hereinabove, there may be more than one air inlet, but, in any case, they will be channeled to the one single valve **8** described herein) and, once inflated, will serve as the separating body between the mesh 1 to which it is attached and, in this case, the car body. It must also be said that the degree of pressure applied (that is, the amount of air which is put into the chamber 3) will have a baring on the degree to which the mesh 1 will be taut, thus making it even more effective in the protection provided thereby, in this case, to guard the vehicle against possible impacts. Hence, the invention would thus be ready to protect the vehicle from any risk of impact (ex. Raining and hailing).

As shown in the example illustrated in FIGURE 6, the valve **8** will be placed as close as possible to the driver's door for greater convenience with regard to its location and its distance for the case of using the electric pump hooked up to the car cigarette lighter. Special mention must be made, in the example in question (private family car) as to there being a (ex. Zipper door **7**) door on the driver's side of the vehicle (with the possibility of also on other door(s). This **7** will be inseparably attached to the rest of the mesh **1** by means of one of its strips or seams **2**. See FIG. 6. Mention must likewise be made as to the possible variation in the door with regard to the location of the driver, according to the nationality of some vehicles.

## Claims

1. Hail-guard mesh for vehicles designed consisting of several elements designed to comprise the whole in question, such as a mesh (1) and (2), an inflatable air chamber (3), suction cups with an attached handle (6) and some hooks (5), all of which is **characterized in that**: The mesh (1) is made of sturdy, flexible material, as in nylon, in a specific shape depending upon the object to be protected, for the purposes of covering the same, and has strips or seams (2) of the same material along the entire edge or side thereof or along the full length and width thereof, which are even sturdier. The mesh (1) has some female attachment elements (9) adhered or affixed to it at several points underneath its strips or seams (2), an entire series of channels comprising an inflatable air chamber (3), which are those on which the male attachment elements (9) are located. The air chamber (3) has one single valve (8) with air inlet nozzle, located as near as possible to the driver's side, this being the air chamber (3) which, once inflated, serves as the separating body between the mesh (1) and (2) and the area to be protected, at the same time as it achieves tightening even further said mesh (1), a chamber (3) which forms a whole, it having to be said that the central tubular section, which runs from the hood to the trunk, over the roof of the vehicle, in the form of a spinal or vertebral body, will be of a relatively greater thickness than the other tubular sections; the invention also consisting of some hooks (5) made of plastic which are attached to the mesh (1) along the sides thereof reinforced with strips or seams (2), exactly where the other strips or seams (2) crossing the width and length of the mesh (1) end; these hooks (5) are anchored to the possible parts of the object for the initial tightening of the mesh (1), prior to inflating the chamber (3); and on those parts of the object on which it is not possible to anchor, the hooks (5) are attached to a suction cup which has a handle (6), which is previously put into place adhered to the surface of the object. On the driver's side, on the mesh (1), there will be a door operated using a zipper (7), this zipper (7) being inseparably attached to the rest of the mesh (1) by means of one of its strips or seams (2).

2. Hail-guard mesh for vehicles, according to Claim 1 hereinabove, consisting of the same elements, adding thereto a number of additional air outlets, which will coincide with the multiple air inlets **characterized in that** the inflatable chamber (3) will have multiple additional air inlets, although all channeled to that one single valve (8); these additional air inlets precisely serving, in due course, once their hermetic seals (4) have been removed, as additional air outlets. In addition thereto, the tubes of the inflatable air chamber (3) are separated from one another, but are jointed by this channeling of air inlets to the single valve (8), thus forming a whole.

3. Hail-guard mesh for vehicles, according to Claim 1 hereinabove, consisting of the same elements, solely replacing the inflatable air chamber (3) with a number of ball-suction cups (10) and (11), and, in a second embodiment, it is **characterized in that** there are some ball-suction cups (10) and (11) which will serve as the separating body between the mesh (1) and (2) and the object to be protected; the ball-suction cups (10) and (11) thus likewise being place underneath the mesh (1), yet not adhered thereto, but rather forming a separating body, all of them being joined together by a connecting wire or cable (14), which will be attached to the spherical part of the ball-suction cup (10) with a crosswise device (15); the ball-suction cups (10) and (11) being previously adhered to the surface of the object to be protected; the ball-suction cups (10) and (11) being spherical or round in shape (10), at the base of which a suction cup (11) is inseparably attached; this being a ball-suction cup (10) and (11) having on the inside thereof an air passage (12), with a cap (13) inserted, being level without overhanging, this cap being located either on the top of the ball-suction cup (10) or on the suction cup (11) proper; the cap having a small groove and being inseparably attached to its "base" at one of its ends.

4. Hail-guard mesh for vehicle, according to Claim 1 hereinabove, consisting of the same elements, replacing only the inflatable air chamber (3) with a separating device (16), and in another embodiment, being **characterized in that** there are some separating devices (16) which are those serving as a separating body between the mesh (1) and (2) and the object to be protected; these separating devices (16) being likewise located underneath the mesh (1), affixed or adhered by female attachment elements (9) at several positions, which will be positioned on the net (1) and its strips or seams (2), and by male attachment elements (9), which will be positioned on the separating devices (16); these separating devices (16) being either spherical or of any other shape, being sturdy and hard, yet at the same time sensitive and delicately flexible; being spaced or located as desired along the length and width of the vehicle body, it being necessary to mention that they are to be put into place at the same time as attaching the protective mesh (1) and (2), given that, as previously stated hereinabove, they are attached or adhered thereto.
